# EUROPÄISCHE PATENTSCHRIFT

(11) **EP 1 121 606 B1**
(45) Veröffentlichungstag und Bekanntmachung des Hinweises auf die Patenterteilung: **30.06.2004**
(21) Anmeldenummer: 00954349.7
(22) Anmeldetag: 21.07.2000
(51) Int. Cl.: G01S 7/03, H01Q 1/12, H01Q 13/24

(54) **MEHRSTRAHLIGER RADARSENSOR MIT EINER HALTERUNG FÜR EINEN FOKUSSIERKÖRPER**
MULTIBEAM RADAR SENSOR WITH A FIXING DEVICE FOR A FOCUSING BODY
DETECTEUR RADAR A PLUSIEURS FAISCEAUX, COMPORTANT UN SUPPORT POUR UN CORPS DE FOCALISATION

(30) Priorität: 21.08.1999 DE 19939834
(43) Veröffentlichungstag der Anmeldung: 08.08.2001
(73) Patentinhaber: ROBERT BOSCH GMBH, 70442 Stuttgart (DE)
(72) Erfinder: SCHMIDT, Ewald, D-71634 Ludwigsburg (DE); BEEZ, Thomas, D-74189 Weinsberg (DE)
(86) Internationale Anmeldenummer: PCT/DE2000/002374
(87) Internationale Veröffentlichungsnummer: WO 2001/014906

(56) Entgegenhaltungen:
- WO-A-98/35403
- GB-A- 2 303 491

## Beschreibung

### Stand der Technik

Die Erfindung geht aus von einem mehrstrahligen Radarsensor mit wenigstens einem Sende-/Empfangselement auf einem Träger und mit einem Fokussierkörper, der zur Vorfokussierung jedem Sende-/Empfangselement zugeordnet ist, nach der Gattung des Hauptanspruchs. Radarsensoren, bei denen zum Senden und Empfangen gemeinsame Antennen verwendet werden, so genannte monostatische Radarsensoren, sind beispielsweise aus der WO 97/02496 bekannt. Hier wird ein FMCW-Radarsensor für ein Fahrzeug zur Detektion von Objekten vorgeschlagen, bei dem beispielsweise drei Sende-/Empfangselemente Sende/Empfangsantennen-Feeds oder so genannte Patches auf der lateralen Struktur eines Mikrowellenstreifenleiters aufgebracht sind. Im Strahlengang ist vor jedem Patch zusätzlich ein dielektrischer Stielstrahler angebracht, um eine bessere Ausleuchtung der dielektrischen Linse und somit eine Vorfokussierung zu erreichen. Es hat sich jedoch herausgestellt, daß eine einwandfreie Funktion der Stielstrahler nur gewährleistet ist, wenn diese exakt positioniert sind. Jede noch so kleine Abweichung von der idealen Position bewirkt eine Überstrahlung der Linse oder eine Kopplung mit benachbarten Stielstrahlern.

Aus der DE 19710 811-A1 ist eine weitere Vorrichtung zum gerichteten Abstrahlen und/oder Aufnehmen elektromagnetischer Wellen bekannt. Diese Vorrichtung besteht aus mindestens einem Antennenelement, einer dielektrischen Linse und einem dielektrischen Körper, der zwischen dem Antennenelement und der dielektrischen Linse angeordnet ist. Dieser dielektrische Körper dient ebenfalls zur Vermeidung von Überstrahlung der dielektrischen Linse und zur Vorfokussierung der von dem Antennenelement abgestrahlten bzw. aufgenommenen elektromagnetischen Milimeterwellen. Zur Vereinfachung der erforderlichen exakten Justage ist der dielektrische Körper flächig ausgedehnt und vorzugsweise topfförmig ausgebildet. Als ungünstig wird dabei angesehen, daß die elektromagnetischen Wellen der einzelnen Antennenelemente durch den dielektrischen Körper nicht entkoppelt werden, da für alle Antennenelemente ein gemeinsamer dielektrische Körper verwendet wird.

Eine weitere Vorrichtung ist aus GB 2 303 491.

### Zeichnung

Ein Ausführungsbeispiel der Erfindung ist in der Zeichnung dargestellt und in der nachfolgenden Beschreibung näher erläutert. Es zeigt Figur 1 eine schematische Schnittdarstellung einer Halterung, Figur 2 zeigt eine räumliche Darstellung einer dielektrischen Platte mit der Halterung und Figur 3 zeigt eine Draufsicht.

### Beschreibung des Ausführungsbeispiels

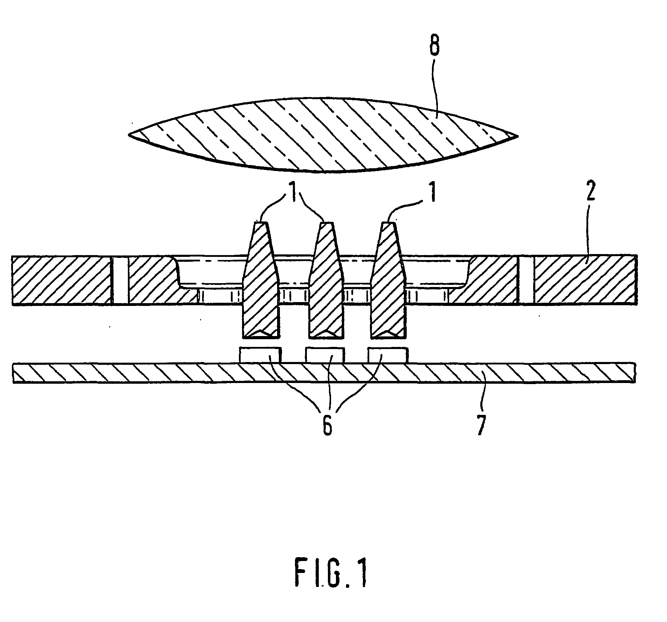

Um die Übersicht zu vereinfachen, wurde in der schematischen Schnittdarstellung der Figur 1 auf die üblichen Komponenten des Radarsensors wie Oszillator, Mischer, Gehäuse etc. verzichtet. Figur 1 zeigt daher nur die unmittelbar zur Erfindung gehörenden Komponenten: Auf einem Träger 7, der üblicherweise in Mikrowellen-Leiterbahntechnik hergestellt ist, befinden sich beispielsweise drei nebeneinander angeordnete Sende-/Empfangselemente 6 für Mikrowellen. Die Sende/Empfangselmente senden Millimeterwellen aus und empfangen die von einem Gegenstand reflektierten Echostrahlen zeitverzögert. Oberhalb der Sende-/Empfangselemente 6 ist über einem Luftspalt zu jedem Sende-/Empfangslelement 6 ein Fokussierkörper 1 angeordnet, der vorzugsweise aus einem kegelförmigen Kunststoffmaterial mit hoher Dielektrizitätskonstanten ausgebildet ist. Diese Fokussierkörper 1 sind per se bekannt und haben die Aufgabe, die Strahlung der Elemente 6 in Bezug auf die räumlich darüber angeordnete dielekrische, fokussierende Linse 8 so zu richten, daß eine möglichst geringe Streuung der Mikrowellen entsteht. Zur mechanischen Befestigung und der exakten Justierung der Fokussierkörper 1 in Bezug auf die Sende-/Empfangselemente 6 ist eine dielektrische Platte 2 vorgesehen, in die einer entsprechende Halterung 4 eingelassen ist.

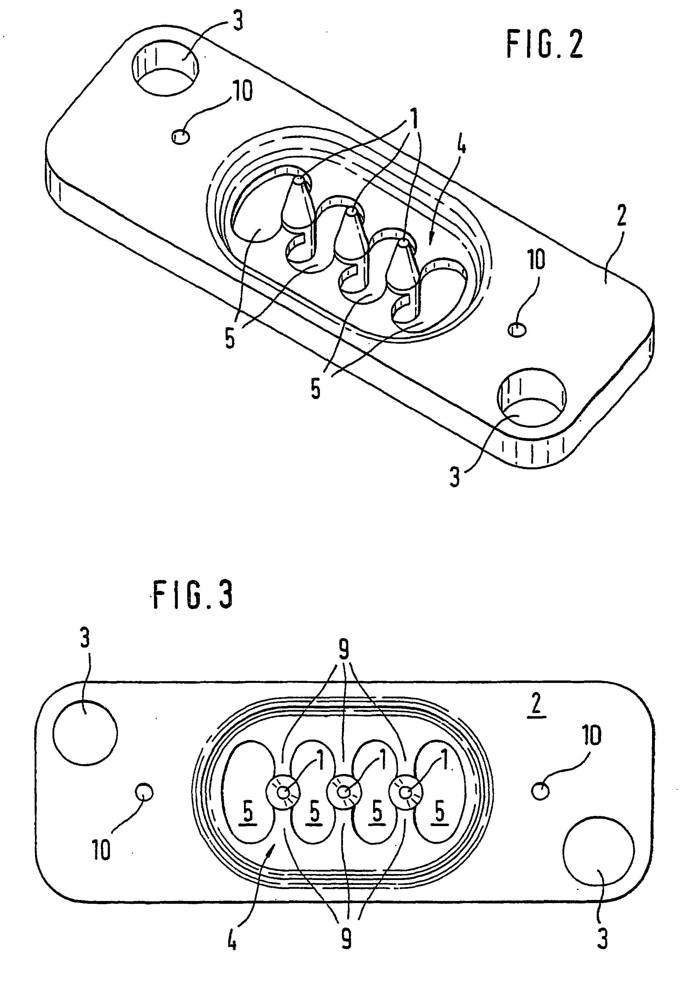

In Figur 2 ist die dielektrische Platte 2 mit der Halterung 4 und den Fokussierkörpern 1 in räumlicher Darstellung gezeichnet. Die dielektrische Platte 2 ist dabei so ausgebildet, daß sie über zwei diametral angeordnete Bohrungen 3 im gewünschten Abstand zum Träger 7 befestigt werden kann. Zur genauen Justierung sind des weiteren zwei Justage-Öffnungen 10 vorgesehen, in die ein nicht dargestellter Dorn greifen kann, so daß die dielektrische Platte relativ zum Träger 7 exakt justiert wird. Ein manueller Abgleich oder dergleichen ist dann nicht mehr erforderlich. Im Bereich der Sende-/Empfangselemente 6 ist in der dielektrischen Platte 2 eine größere Öffnung vorgesehen, in die eine Halterung 4 eingepaßt ist. Die Größe dieser Öffnung bzw. die mechanischen Abmessungen der Halterung 4 bezüglich des Durchmessers der Dicke und der Wahl des Materials ist so gewählt, daß die Koppeleffekte zu benachbarten Fokussierkörpern 1 möglichst gering sind. Aus diesem Grund hat die Halterung 4 in den Zwischenräumen zwischen benachbarten Fokussierkörpern 1 Aussparungen 5, da eine Kopplung über die Luftstrecke zwischen den Fokussierkörpern 1 am geringsten ist. Damit die Fokussierkörper 1 mechanischen Halt finden, sind quer zu den Aussparungen 5 Zungen 9 angeordnet, wie die Daraufsicht der Figur 3 zeigt. Der Figur 3, aber insbesondere aber auch der Figur 1 ist entnehmbar, daß die Halterung 4 dünner ausgebildet ist als die dielektrische Platte 2. Durch geeignete Wahl der Materialien und der Abmessung und Gestaltung der Halterung 4 kann eine Minimierung der Kopplung zwischen den Fokussierkörpern 1 erreicht werden. Dabei ist darauf zu achten, daß der Luftspalt zwischen den Fokussierkörpern 1 möglichst groß ausgebildet ist, die Zungen aber derart geformt sind, daß sie noch einen sicheren Halt der Fokussierkörper 1 insbesondere bei Temperaturwechsel und mechanischen Beanspruchungen wie Schwingung und Biegung gewährleisten. Bei entsprechender Ausgestaltung der Halterung 4 wird somit eine optimale Vorfokussierung durch die Fokussierkörper 1 erreicht.

In weiterer Ausgestaltung der Erfindung ist vorgesehen, die gesamte Anordnung aus der Platte 2, der Halterung 4, der Zungen 5 und der Fokussierkörper 1 in einem Arbeitsgang, beispielsweise als Kunststoffspritzgußteil herzustellen.

## Patentansprüche

1. Mehrstrahliger Radarsensor mit wenigstens zwei Sende/Empfangselementen (6) auf einem Träger (7), mit mindestens zwei Fokussierkörpen (1), die zur Vorfokussierung des Strahlengangs jedem Sende-/Empfangselement (6) zugeordnet sind, mit einer Halterung (4) für die Fokussierkörper (1) und mit einer dielektrischen Linse (8), die im Strahlengang des Sende-/Empfangselements (6) und der Fokussierkörper (1) angeordnet ist, **dadurch gekennzeichnet, daß** die Halterung (4) bezüglich ihrer Berührungspunkte mit den Fokussierkörpern (1) derart ausgebildet ist, daß in der Halterung (4) Aussparungen (5) derart vorgesehen sind, daß für jedes zu befestigende Fokussierelement (1) wenigstens zwei sich gegenüberliegende Zungen (9) angeordnet sind, wobei eine Minimierung der energetischen Kopplung zum benachbarten Fokussierkörper (1) erfolgt.

2. Radarsensor nach Anspruch 1, **dadurch gekennzeichnet, daß** die Halterung (4) wenigstens ein Material mit einer niedrigen Dielektrizitätskonstanten enthält.

3. Radarsensor nach Anspruch 1 oder 2, **dadurch gekennzeichnet, daß** die Halterung (4) derart ausgebildet ist, daß sie den Fokussierkörper (1) nur in einem Teilbereich seines Umfangs fixiert.

4. Radarsensor nach einem der vorangegangenen Ansprüche, **dadurch gekennzeichnet, daß** die Aussparungen (5) zwischen den Fokussierkörpern (1) angeordnet sind.

5. Radarsensor nach einem der vorherigen Ansprüche, **dadurch gekennzeichnet, daß** die Halterung (4) ausgebildet ist, bei Temperaturänderungen die Justage der Fokussierkörper (1) im Bezug auf das Sende-/Empfangselement (6) bzw. die fokussierende Linse (8) beizubehalten.

6. Radarsensor nach einem der vorherigen Ansprüche, **dadurch gekennzeichnet, daß** die Halterung (4) ausgebildet ist, bei mechanischen Belastungen wie Stoß, Biegung und Vibration, die Justage der Fokussierkörper (1) im Bezug auf das Sende-/Empfangselement (6) bzw. die fokussierende Linse (8) beizubehalten.

7. Radarsensor nach einem der vorherigen Ansprüche, **dadurch gekennzeichnet, daß** die Zungen (9) an der dem benachbarten Fokussierkörper (1) abgewandten Seite angeordnet sind.

8. Radarsensor nach einem der vorherigen Ansprüche, **dadurch gekennzeichnet, daß** die Halterung (4) in einer Öffnung einer dielektrischen Platte (2) fixiert ist, daß die dielektrische Platte (2) dicker ist als der Halterung (4) und daß die dielektrische Platte (2) oder die Halterung (4) wenigstens zwei Justage-Öffnungen (1)0 zur genauen Ausrichtung bezüglich der Sende-/Empfangselemente (6) auf dem Träger (7) aufweist.

9. Halterung in einem mehrstrahligen Radarsensor, mit wenigstens zwei Sende-/Empfangselementen (6), und mit mindestens zwei Fokussierkörpern (1), die zur Vorfokussierung des Strahlengangs jedem Sende-/Empfangselement (6) zugeordnet sind, **dadurch gekennzeichnet, daß** in der Halterung (4) Aussparungen (5) derart vorgesehen sind, daß für jedes zu befestigende Fokussierkörper (1) wenigstens zwei sich gegenüberliegende Zungen (9) angeordnet sind.

10. Halterung nach Anspruch 9, **dadurch gekennzeichnet, daß** die Halterung (4) zusammen mit der Platte (2), den Zungen (9) und den Fokussierkörpern (1) in einem Arbeitsgang als ein Kunststoffteil herstellbar ist.

## Claims

1. Multi-beam radar sensor having at least two transmitting/receiving elements (6) on a mount (7) having at least two focussing bodies (1) which are associated with each transmitting/receiving element (6) for initial focussing of the beam path, having a holder (4) for the focussing bodies (1) and having a dielectric lens (8) which is arranged in the beam path of the transmitting/receiving element (6) and of the focussing bodies (1), **characterized in that** the holder (4) is designed with respect to its contact points with the focussing bodies (1) in such a way that cutouts (5) are provided in the holder (4) such that at least two mutually opposite tongues (9) are arranged for each focussing element (1) to be fitted, with the energetic coupling to the adjacent focussing body (1) being minimized.

2. Radar sensor according to Claim 1, **characterized in that** the holder (4) contains at least one material with a low dielectric constant.

3. Radar sensor according to Claim 1 or 2, **characterized in that** the holder (4) is designed such that it fixes the focussing body (1) only in a subarea of its circumference.

4. Radar sensor according to one of the preceding claims, **characterized in that** the cutouts (5) are arranged between the focussing bodies (1).

5. Radar sensor according to one of the preceding claims, **characterized in that** the holder (4) is designed to maintain the adjustment of the focussing bodies (1) with respect to the transmitting/receiving element (6) and with respect to the focussing lens (8), when temperature changes occur.

6. Radar sensor according to one of the preceding claims, **characterized in that** the holder (4) is designed to maintain the adjustment of the focussing bodies (1) with respect to the transmitting/receiving element (6) and with respect to the focussing lens (8) when mechanical loads occur, such as shock, bending and vibration.

7. Radar sensor according to one of the preceding claims, **characterized in that** the tongues (9) are arranged on the side facing away from the adjacent focussing body (1).

8. Radar sensor according to one of the preceding claims, **characterized in that** the holder (4) is fixed in an opening in a dielectric plate (2), **in that** the dielectric plate (2) is thicker than the holder (4) and **in that** the dielectric plate (2) or the holder (4) has at least two adjustment openings (1)0 for accurate alignment with respect to transmitting/receiving elements (6) on the mount (7).

9. Holder in a multi-beam radar sensor, having at least two transmitting/receiving elements (6) and having at least two focussing bodies (1) which are associated with each transmitting/receiving element (6) for initial focussing of the beam path, **characterized in that** cutouts (5) are provided in the holder (4) such that at least two mutually opposite tongues (9) are arranged for each focussing body (1) to be fitted.

10. Holder according to Claim 9, **characterized in that** the holder (4) can be produced together with the plate (2), the tongues (9) and the focussing bodies (1) as a plastic part in one process.

## Revendications

1. Détecteur radar à plusieurs faisceaux comportant, sur un support (7), au moins deux éléments émetteurs-récepteurs (6) auxquels sont associés au moins deux corps de focalisation (1) pour préfocaliser la trajectoire du faisceau, une fixation (4) pour les corps de focalisation (1) et une lentille diélectrique (8) disposée sur la trajectoire du faisceau de l'élément émetteur-récepteur (6) et des corps de focalisation (1),
**caractérisé en ce que**
la fixation (4) est constituée, en ce qui concerne ses points de contact avec les corps de focalisation (1), de manière à présenter des évidements (5) faisant qu'à chaque élément de focalisation (1) à fixer sont associées au moins deux languettes (9) se faisant face, de manière à minimiser le couplage énergétique avec le corps de focalisation (1) concerné.

2. Détecteur radar selon la revendication 1,
**caractérisé en ce que**
la fixation (4) contient au moins un matériau présentent une constante diélectrique basse.

3. Détecteur radar selon la revendication 1 ou 2,
**caractérisé en ce que**
la fixation (4) est constituée de manière à fixer le corps de focalisation (1) sur seulement une partie de la périphérie de celui-ci.

4. Détecteur radar selon l'une des revendications précédentes,
**caractérisé en ce que**
les évidements (5) se trouvent entre les corps de focalisation (1).

5. Détecteur radar selon l'une des revendications précédentes,
**caractérisé en ce que**
la fixation (4) est constituée de manière que l'alignement des corps de focalisation (1) par rapport à l'élément émetteur-récepteur (6) et à la lentille focalisante (8) est conservé quand la température varie.

6. Détecteur radar selon l'une des revendications précédentes,
**caractérisé en ce que**
la fixation (4) est constituée de manière que l'alignement du corps de focalisation (1) par rapport à l'élément émetteur-récepteur (6) et à la lentille focalisatrice (8) est conservé quand se produisent des contraintes mécaniques telles que des chocs, des flexions et des vibrations.

7. Détecteur radar selon l'une des revendications précédentes,
**caractérisé en ce que**
les languettes (9) sont disposées sur le côté non tourné vers le corps de focalisation voisin (1).

8. Détecteur radar selon l'une des revendications précédentes,
**caractérisé en ce que**
la fixation (4) est fixée dans une ouverture d'une plaque diélectrique (2) qui est plus épaisse que la fixation (4), la plaque (2) ou la fixation (4) présentant au moins deux ouvertures d'ajustage (10) pour une orientation exacte par rapport à l'élément émetteur-récepteur (6) sur le support (7).

9. Fixation montée dans un détecteur radar à plusieurs faisceaux ayant au moins deux éléments émetteurs-récepteurs (6), et au moins deux corps de focalisation (1) associer à chaque émetteur-récepteur (6) pour préfoculiser la trajectoire du faisceau,
**caractérisée en ce que**
dans la fixation (4) sont prévus des évidements (5) de manière qu'à chaque corps de focalisation (1) sont associées au moins deux languettes (9) se faisant face.

10. Fixation selon la revendication 9,
**caractérisé en ce que**
la fixation (4) peut être réalisée monobloc avec la plaque (2), les languettes (9) et les corps de focalisation (1), en une seule opération, sous la forme d'une pièce en matière plastique.
